# EUROPEAN PATENT APPLICATION

(11) **EP 4 770 219 A1**
(43) Date of publication of application: **01.07.2026**
(21) Application number: 24870805.9
(22) Date of filing: 25.09.2024
(51) Int. Cl.: H04W 56/00

(54) **COMMUNICATION METHOD, AND APPARATUS**

(30) Priority: 26.09.2023 CN 202311288746
(71) Applicant: Huawei Technologies Co., Ltd., Shenzhen, Guangdong 518129 (CN)
(72) Inventor: CHEN, Ying, Shenzhen, Guangdong 518129 (CN); SHEN, Zhongyi, Shenzhen, Guangdong 518129 (CN); WANG, Jun, Shenzhen, Guangdong 518129 (CN)
(74) Representative: Goddar, Heinz J.
(86) International application number: PCT/CN2024/121191
(87) International publication number: WO 2025/067261

(57) **Abstract**

This application relates to the communication field, and discloses a communication method and apparatus, to improve a success rate of GNSS measurement. The communication method is applied to a terminal. The terminal is configured with a first time interval for global navigation satellite system measurement, and is further configured with a second time interval for radio resource management measurement. The first time interval and the second time interval at least partially overlap. The method includes: performing global navigation satellite system measurement by using the first time interval, and performing radio resource management measurement by using a third time interval, where the third time interval is a time interval obtained by delaying the second time interval, and the third time interval is determined based on the second time interval and a completion time of global navigation satellite system measurement.

## Description

This application claims priority to Chinese Patent Application No. 202311288746.2, filed with the China National Intellectual Property Administration on September 26, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Compared with terrestrial communication, satellite communication has unique advantages, for example, can provide wider coverage; and satellite base stations are less susceptible to damage from natural disasters or external forces. Introduction of satellite communication into 5th generation (5th Generation, 5G) mobile communication technology can provide communication services for areas that cannot be covered by terrestrial communication networks, such as oceans and forests, thereby enhancing high coverage of 5G communication, and enhancing reliability of 5G communication. For example, satellite communication can ensure that users traveling on high-speed moving transportation means such as airplanes and trains obtain higher-quality communication services. Satellite communication can provide more data transmission resources for 5G communication, and improve a network rate. Therefore, supporting both terrestrial communication and satellite communication is an inevitable trend of 5G communication, and has significant advantages in terms of wide coverage, reliability, multi-connectivity, a high throughput, and the like.

Satellite communication is most significantly characterized by high mobility and a long communication delay. Compared with terrestrial communication, satellite communication has the following characteristic: A terminal needs to further implement synchronization based on information such as global navigation satellite system (Global Navigation Satellite System, GNSS) information and ephemeris on the basis of existing uplink synchronization. Therefore, the terminal needs to perform GNSS measurement to obtain the GNSS information. However, due to imperfect resource configuration in a current GNSS measurement process, a success rate of GNSS measurement is low.

### SUMMARY

This application provides a communication method and apparatus, to improve a success rate of GNSS measurement.

To achieve the foregoing objective, the following technical solutions are used in this application.

According to a first aspect, a communication method is provided. The method is applied to a terminal. The terminal herein may be the terminal itself, or may be a processor, a module, a chip, a chip system, or the like that is in the terminal and that implements the method. The terminal is configured with a first time interval for global navigation satellite system measurement, the terminal is configured with a second time interval for radio resource management measurement, and the first time interval and the second time interval at least partially overlap. The method includes: performing global navigation satellite system measurement by using the first time interval, and performing radio resource management measurement by using a third time interval. The third time interval is a time interval obtained by delaying the second time interval, and the third time interval is determined based on the second time interval and global navigation satellite system measurement. Alternatively, the method includes: performing radio resource management measurement by using the second time interval, and performing global navigation satellite system measurement by using a fourth time interval. The fourth time interval is a time interval obtained by delaying the first time interval, and the fourth time interval is determined based on the first time interval and radio resource management measurement.

In the first aspect, when the first time interval configured for the terminal for GNSS measurement and the second time interval configured for the terminal for RRM measurement at least partially overlap, GNSS measurement is performed by using the first time interval, and RRM measurement is performed by using the third time interval that does not overlap with the first time interval (or RRM measurement is performed by using the second time interval, and GNSS measurement is performed by using the fourth time interval that does not overlap with the second time interval). This avoids a conflict between GNSS measurement and RRM measurement, and improves a success rate of GNSS measurement and RRM measurement.

In a possible implementation, the method may further include: determining a measurement priority of global navigation satellite system measurement and a measurement priority of radio resource management measurement. Performing global navigation satellite system measurement by using the first time interval, and performing radio resource management measurement by using the third time interval include: when the measurement priority of global navigation satellite system measurement is higher than the measurement priority of radio resource management measurement, performing global navigation satellite system measurement by using the first time interval, and performing radio resource management measurement by using the third time interval. Performing radio resource management measurement by using the second time interval, and performing global navigation satellite system measurement by using the fourth time interval include: when the measurement priority of global navigation satellite system measurement is not higher than the measurement priority of radio resource management measurement, performing radio resource management measurement by using the second time interval, and performing global navigation satellite system measurement by using the fourth time interval.

In this implementation, a delayed time interval is determined based on the measurement priority of GNSS measurement and the measurement priority of RRM measurement, thereby ensuring that measurement with a higher priority is preferentially performed.

In a possible implementation, determining the measurement priority of global navigation satellite system measurement and the measurement priority of radio resource management measurement includes: determining a first delay value of an end time of the first time interval relative to a start time of the second time interval, and determining a second delay value of an end time of the second time interval relative to a start time of the first time interval; when the first delay value is less than the second delay value, determining that the priority of global navigation satellite system measurement is higher than the priority of radio resource management measurement; and when the first delay value is not less than the second delay value, determining that the priority of global navigation satellite system measurement is not higher than the priority of radio resource management measurement.

In this implementation, the priority of GNSS measurement and the priority of RRM measurement are determined based on the first delay value of the third time interval relative to the second time interval and the second delay value of the fourth time interval relative to the first time, so that a delay time can be reduced.

In a possible implementation, determining the measurement priority of global navigation satellite system measurement and the measurement priority of radio resource management measurement includes: receiving measurement priority indication information, where the measurement priority indication information indicates the measurement priority of global navigation satellite system measurement and the measurement priority of radio resource management measurement; and determining the measurement priority of global navigation satellite system measurement and the measurement priority of radio resource management measurement based on the measurement priority indication information.

In this implementation, the measurement priority of GNSS measurement and the measurement priority of RRM measurement are indicated by a network device, thereby ensuring that measurement with a higher priority is preferentially performed.

In a possible implementation, a fifth time interval between a start time of the third time interval and a completion time of global navigation satellite system measurement is greater than a first time threshold. The method further includes: receiving radio resource management configuration information by using the fifth time interval. Performing radio resource management measurement by using the third time interval includes: performing radio resource management measurement based on the radio resource management configuration information by using the third time interval.

In this implementation, the RRM configuration information is received by using the fifth time interval, thereby improving time utilization. In addition, RRM measurement is performed based on the received RRM configuration information, and the received RRM configuration information has superior timeliness, so that accuracy of RRM measurement is improved.

In a possible implementation, the fifth time interval between the start time of the third time interval and the completion time of global navigation satellite system measurement is greater than the first time threshold. The method further includes: sending measurement result information of global navigation satellite system measurement by using the fifth time interval.

In this implementation, the measurement result information of GNSS measurement is sent to the network device by using the fifth time interval, so that time utilization is improved, and the network device can obtain the measurement result information of GNSS measurement in a timely manner.

In a possible implementation, the terminal obtains a plurality of first measurement results of a plurality of time intervals through radio resource management measurement before the first time interval. The method further includes: discarding at least one measurement result in the plurality of first measurement results.

In this implementation, an invalid measurement result in the plurality of first measurement results obtained through measurement before the first time interval is discarded, to ensure accuracy of RRM measurement.

In a possible implementation, the second time interval includes a plurality of sub-intervals. The third time interval is a time interval obtained by delaying all of the plurality of sub-intervals. Alternatively, the third time interval includes a target sub-interval. The target sub-interval includes a sub-interval obtained after a sub-interval overlapping with the first time interval is removed from the plurality of sub-intervals.

In a possible implementation, the method further includes: when global navigation satellite system measurement is completed by using the first time interval, starting to perform radio resource management measurement at a first moment, where the first moment is determined based on a completion moment of global navigation satellite system measurement; and after radio resource management measurement is terminated by using the second time interval, starting to perform global navigation satellite system measurement at a second moment, where the second moment is determined based on a completion moment of radio resource management measurement.

In this implementation, when GNSS measurement is completed by using the first time interval, RRM measurement starts to be performed at the first moment, to ensure that RRM measurement is performed in time.

In a possible implementation, the first moment is the completion moment of global navigation satellite system measurement, or the first moment is a moment obtained by delaying the completion moment of global navigation satellite system measurement by a second time threshold. The second moment is the completion moment of radio resource management measurement, or the second moment is a moment obtained by delaying the completion moment of radio resource management measurement by a third time threshold.

In a possible implementation, when global navigation satellite system measurement is performed by using the first time interval, and the start time of the first time interval is later than the start time of the second time interval, the method further includes: performing radio resource management measurement by using a sixth time interval, where the sixth time interval is a time interval between the start time of the first time interval and the start time of the second time interval. Performing radio resource management measurement by using the third time interval includes: when radio resource management measurement performed by using the sixth time interval fails, performing radio resource management measurement by using the third time interval.

In a possible implementation, when radio resource management measurement is performed by using the second time interval, and a start time of the first time interval is earlier than a start time of the second time interval, the method further includes: performing global navigation satellite system measurement by using a sixth time interval, where the sixth time interval is a time interval between the start time of the first time interval and the start time of the second time interval. Performing global navigation satellite system measurement by using the fourth time interval includes: when global navigation satellite system measurement performed by using the sixth time interval fails, performing global navigation satellite system measurement by using the fourth time interval.

According to a second aspect, a communication method is provided. The method is applied to a network device. The network device herein may be the network device itself, or may be a processor, a module, a chip, a chip system, or the like that is in the network device and that implements the method. The method includes: sending measurement priority indication information to a terminal, where the measurement priority indication information indicates a measurement priority of global navigation satellite system measurement and a measurement priority of radio resource management measurement, the terminal is configured with a first time interval for global navigation satellite system measurement, the terminal is configured with a second time interval for radio resource management measurement, and the first time interval and the second time interval at least partially overlap.

In the second aspect, the measurement priority of GNSS measurement and the measurement priority of RRM measurement are indicated by the network device, thereby ensuring that measurement with a higher priority is preferentially performed.

According to a third aspect, a communication method is provided. The method is applied to a terminal. The terminal herein may be the terminal itself, or may be a processor, a module, a chip, a chip system, or the like that is in the terminal and that implements the method. The terminal is configured with a first time interval for global navigation satellite system measurement, the terminal is configured with a second time interval for radio resource management measurement, and there is a seventh time interval interposed between the first time interval and the second time interval. The method includes: performing global navigation satellite system measurement by using the first time interval; when global navigation satellite system measurement is not completed by using the first time interval, continuing to perform global navigation satellite system measurement within the seventh time interval; when global navigation satellite system measurement is completed within the seventh time interval, performing radio resource management measurement by using the second time interval; and entering an idle mode when global navigation satellite system measurement is not completed within the seventh time interval.

In the third aspect, in a scenario in which a time interval for GNSS measurement and a time interval for RRM measurement does not overlap, the seventh time interval interposed between the first time interval and the second time interval is used to continue to perform GNSS measurement, thereby further ensuring a success rate of GNSS measurement.

In a possible implementation, the seventh time interval is less than a fourth time threshold, and the method further includes:
after radio resource management measurement is terminated, sending measurement result information of global navigation satellite system measurement.

In this implementation, the measurement result information of GNSS measurement is not sent within the seventh time interval. Instead, the measurement result information of GNSS measurement is sent to a network device when RRM measurement is completed, thereby improving a success rate of sending the measurement result information of GNSS measurement.

According to a fourth aspect, a communication apparatus is provided. The apparatus is used in a terminal. The terminal herein may be the terminal itself, or may be a processor, a module, a chip, a chip system, or the like that is in the terminal and that implements the method. The terminal is configured with a first time interval for global navigation satellite system measurement, the terminal is configured with a second time interval for radio resource management measurement, and the first time interval and the second time interval at least partially overlap. The apparatus includes: a processing module, configured to: perform global navigation satellite system measurement by using the first time interval, and perform radio resource management measurement by using a third time interval. The third time interval is a time interval obtained by delaying the second time interval, and the third time interval is determined based on the second time interval and global navigation satellite system measurement. Alternatively, the processing module is further configured to: perform radio resource management measurement by using the second time interval, and perform global navigation satellite system measurement by using a fourth time interval. The fourth time interval is a time interval obtained by delaying the first time interval, and the fourth time interval is determined based on the first time interval and radio resource management measurement.

In a possible implementation, the processing module is further configured to determine a measurement priority of global navigation satellite system measurement and a measurement priority of radio resource management measurement. The processing module is specifically configured to: when the measurement priority of global navigation satellite system measurement is higher than the measurement priority of radio resource management measurement, perform global navigation satellite system measurement by using the first time interval, and perform radio resource management measurement by using the third time interval. The processing module is further specifically configured to: when the measurement priority of global navigation satellite system measurement is not higher than the measurement priority of radio resource management measurement, perform radio resource management measurement by using the second time interval, and perform global navigation satellite system measurement by using the fourth time interval.

In a possible implementation, the processing module is specifically configured to: determine a first delay value of an end time of the first time interval relative to a start time of the second time interval, and determine a second delay value of an end time of the second time interval relative to a start time of the first time interval; when the first delay value is less than the second delay value, determine that the priority of global navigation satellite system measurement is higher than the priority of radio resource management measurement; and when the first delay value is not less than the second delay value, determine that the priority of global navigation satellite system measurement is not higher than the priority of radio resource management measurement.

In a possible implementation, the apparatus further includes a transceiver module. The processing module is specifically configured to invoke the transceiver module to receive measurement priority indication information, where the measurement priority indication information indicates the measurement priority of global navigation satellite system measurement and the measurement priority of radio resource management measurement. The processing module is further specifically configured to determine the measurement priority of global navigation satellite system measurement and the measurement priority of radio resource management measurement based on the measurement priority indication information.

In a possible implementation, a fifth time interval between a start time of the third time interval and a completion time of global navigation satellite system measurement is greater than a first time threshold. The apparatus further includes the transceiver module. The processing module is further configured to invoke the transceiver module to receive radio resource management configuration information by using the fifth time interval. The processing module is specifically configured to perform radio resource management measurement based on the radio resource management configuration information by using the third time interval.

In a possible implementation, the fifth time interval between the start time of the third time interval and the completion time of global navigation satellite system measurement is greater than the first time threshold. The apparatus further includes the transceiver module. The processing module is further configured to invoke the transceiver module to send measurement result information of global navigation satellite system measurement by using the fifth time interval.

In a possible implementation, the terminal obtains a plurality of first measurement results of a plurality of time intervals through radio resource management measurement before the first time interval. The processing module is further configured to discard at least one measurement result in the plurality of first measurement results.

In a possible implementation, the second time interval includes a plurality of sub-intervals. The third time interval is a time interval obtained by delaying all of the plurality of sub-intervals. Alternatively, the third time interval includes a target sub-interval. The target sub-interval includes a sub-interval obtained after a sub-interval overlapping with the first time interval is removed from the plurality of sub-intervals.

In a possible implementation, the processing module is further configured to: when global navigation satellite system measurement is completed by using the first time interval, start to perform radio resource management measurement at a first moment, where the first moment is determined based on a completion moment of global navigation satellite system measurement; and after radio resource management measurement is terminated by using the second time interval, start to perform global navigation satellite system measurement at a second moment, where the second moment is determined based on a completion moment of radio resource management measurement.

In a possible implementation, the first moment is the completion moment of global navigation satellite system measurement, or the first moment is a moment obtained by delaying the completion moment of global navigation satellite system measurement by a second time threshold. The second moment is the completion moment of radio resource management measurement, or the second moment is a moment obtained by delaying the completion moment of radio resource management measurement by a third time threshold.

In a possible implementation, the processing module may be further configured to: when global navigation satellite system measurement is performed by using the first time interval, and the start time of the first time interval is later than the start time of the second time interval, perform radio resource management measurement by using a sixth time interval, where the sixth time interval is a time interval between the start time of the first time interval and the start time of the second time interval. The processing module is specifically configured to: when radio resource management measurement performed by using the sixth time interval fails, perform radio resource management measurement by using the third time interval.

In a possible implementation, the processing module may be further configured to: when radio resource management measurement is performed by using the second time interval, and a start time of the first time interval is earlier than a start time of the second time interval, perform global navigation satellite system measurement by using a sixth time interval, where the sixth time interval is a time interval between the start time of the first time interval and the start time of the second time interval. The processing module is specifically configured to: when global navigation satellite system measurement performed by using the sixth time interval fails, perform global navigation satellite system measurement by using the fourth time interval.

According to a fifth aspect, a communication apparatus is provided. The apparatus is used in a network device. The network device herein may be the network device itself, or may be a processor, a module, a chip, a chip system, or the like that is in the network device and that implements the method. The apparatus includes a transceiver module, configured to send measurement priority indication information to a terminal, where the measurement priority indication information indicates a measurement priority of global navigation satellite system measurement and a measurement priority of radio resource management measurement, the terminal is configured with a first time interval for global navigation satellite system measurement, the terminal is configured with a second time interval for radio resource management measurement, and the first time interval and the second time interval at least partially overlap.

According to a sixth aspect, a communication apparatus is provided. The apparatus is used in a terminal. The terminal herein may be the terminal itself, or may be a processor, a module, a chip, a chip system, or the like that is in the terminal and that implements the method. The terminal is configured with a first time interval for global navigation satellite system measurement, the terminal is configured with a second time interval for radio resource management measurement, and there is a seventh time interval interposed between the first time interval and the second time interval. The apparatus includes a processing module, configured to perform global navigation satellite system measurement by using the first time interval. The processing module is further configured to: when global navigation satellite system measurement is not completed by using the first time interval, continue to perform global navigation satellite system measurement within the seventh time interval. The processing module is further configured to: when global navigation satellite system measurement is completed within the seventh time interval, perform radio resource management measurement by using the second time interval. The processing module is further configured to enter an idle mode when global navigation satellite system measurement is not completed within the seventh time interval.

In a possible implementation, the seventh time interval is less than a fourth time threshold, and a transceiver module is further configured to: after radio resource management measurement is terminated, send measurement result information of global navigation satellite system measurement.

According to a seventh aspect, this application provides a communication apparatus. The communication apparatus includes a processor and a transceiver. The processor and the transceiver are configured to support the communication apparatus in performing the method according to the first aspect to the third aspect. Further, the communication apparatus may further include a memory. The memory stores computer instructions, and the processor may run the computer instructions to perform the method according to the first aspect to the third aspect.

According to an eighth aspect, this application provides a computer-readable storage medium. The computer-readable storage medium stores computer instructions. When the computer instructions are run, the method according to the first aspect to the third aspect is performed.

According to a ninth aspect, this application provides a computer program product including instructions. When the computer program product is run on a computer, the computer is enabled to perform the method according to the first aspect to the third aspect.

According to a tenth aspect, this application provides a chip. The chip includes a processor and a transceiver. The processor and the transceiver are configured to support a communication apparatus in performing the method according to the first aspect to the third aspect.

For beneficial effects described in the fourth aspect to the tenth aspect of this application, correspondingly refer to beneficial effect analysis in the first aspect to the third aspect. Details are not described herein again.

### BRIEF DESCRIPTION OF DRAWINGS

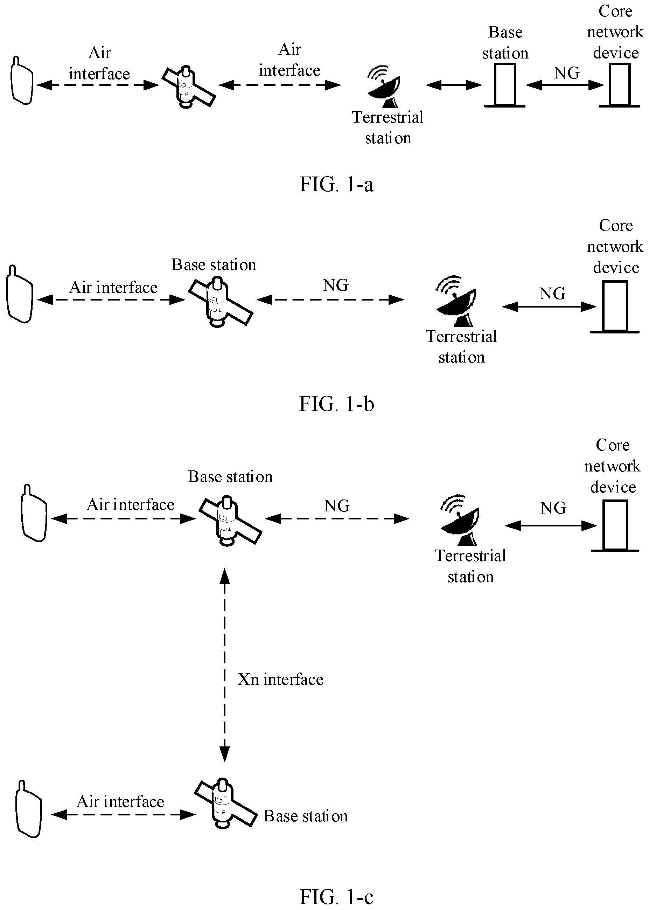

FIG. 1-a is a diagram of a structure of a communication system according to an embodiment of this application;
FIG. 1-b is a diagram of a structure of another communication system according to an embodiment of this application;
FIG. 1-c is a diagram of a structure of another communication system according to an embodiment of this application;
FIG. 2 is a schematic flowchart of a communication method according to an embodiment of this application;
FIG. 3 is a diagram of a time interval according to an embodiment of this application;
FIG. 4 is a diagram of another time interval according to an embodiment of this application;
FIG. 5 is a diagram of another time interval according to an embodiment of this application;
FIG. 6 is a diagram of another time interval according to an embodiment of this application;
FIG. 7 is a diagram of another time interval according to an embodiment of this application;
FIG. 8 is a schematic flowchart of another communication method according to an embodiment of this application;
FIG. 9 is a diagram of another time interval according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a schematic flowchart of another communication method according to an embodiment of this application;
FIG. 15 is a schematic flowchart of another communication method according to an embodiment of this application;
FIG. 16 is a schematic flowchart of another communication method according to an embodiment of this application;
FIG. 17 is a schematic flowchart of another communication method according to an embodiment of this application;
FIG. 18 is a diagram of another time interval according to an embodiment of this application;
FIG. 19 is a schematic flowchart of another communication method according to an embodiment of this application;
FIG. 20 is a diagram of another time interval according to an embodiment of this application;
FIG. 21 is a schematic flowchart of another communication method according to an embodiment of this application;
FIG. 22 is a diagram of another time interval according to an embodiment of this application;
FIG. 23 is a schematic flowchart of another communication method according to an embodiment of this application;
FIG. 24 is a schematic flowchart of another communication method according to an embodiment of this application;
FIG. 25 is a diagram of a structure of a communication apparatus according to an embodiment of this application;
FIG. 26 is a diagram of a structure of another communication apparatus according to an embodiment of this application; and
FIG. 27 is a diagram of a structure of another communication apparatus according to an embodiment of this application.

### DESCRIPTION OF EMBODIMENTS

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

It should be noted that, in the specification, claims, and accompanying drawings of this application, the terms "first", "second", and the like are intended to distinguish between different objects but do not indicate a particular order. In addition, the terms "include", "have", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in embodiments of this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural. It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In addition, "connection" in embodiments of this application means various connection manners such as a direct connection or an indirect connection, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and data receiving. That is, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

Compared with terrestrial communication, satellite communication has unique advantages. For example, satellite communication can provide wider coverage, and satellite base stations are not vulnerable to natural disasters or external forces. Supporting both terrestrial communication and satellite communication is an inevitable trend of 5G communication, and has significant advantages in terms of wide coverage, reliability, multi-connectivity, a high throughput, and the like.

Satellite communication is most significantly characterized by high mobility and a long communication delay. Compared with terrestrial communication, satellite communication has the following characteristic: A terminal needs to further implement synchronization based on information such as global navigation satellite system (Global Navigation Satellite System, GNSS) information and ephemeris on the basis of existing uplink synchronization. For an internet of things (Internet of Things, IoT) terminal, considering that most IoT services have a feature of periodic transmission of short packets, a communication manner of a short-time connection is enhanced in an existing standard. The short-time connection herein is a connection process in which the terminal initiates access to a network device, completes uplink data transmission, and then finally exits a connected mode. In this process, the terminal is in the connected mode for a short time. It is considered that GNSS information (information related to a geographical location of the terminal, for example, information such as coordinates, longitude, latitude, and height of the terminal) obtained by the terminal before random access is always valid. In other words, in the entire connection process, the GNSS information can meet a synchronization requirement without a need of being updated. However, when the terminal is in the connected mode for a long time, the GNSS information may become outdated due to possible movement of the terminal. Therefore, the existing standard cannot support a satellite communication scenario in which the terminal is in the connected mode for a long time.

To overcome the inability of the existing standard to support the satellite communication scenario in which the terminal is in the connected mode for a long time, currently, a network device side configures a GNSS measurement gap for the terminal in the connected mode, and the terminal is allowed to perform GNSS measurement within the measurement gap in the connected mode, so that the terminal can remain the connected mode for a long time without falling back to an idle mode, thereby meeting a communication requirement of the satellite communication scenario in which the terminal is in the connected mode for a long time. However, if a GNSS measurement gap is configured for the terminal, the GNSS measurement gap may conflict with some intervals that have been configured for the terminal, for example, a radio resource management (radio resource management, RRM) measurement gap, leading to a failure of GNSS measurement. The terminal cannot perform RRM measurement while performing GNSS measurement, or cannot perform GNSS measurement while performing RRM measurement.

It may be learned that, due to imperfect resource configuration in a current GNSS measurement process, a success rate of GNSS measurement is low.

To resolve the foregoing technical problem, embodiments of this application provide a communication method. The following describes the method provided in embodiments of this application with reference to the accompanying drawings of this specification.

The communication method provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

The communication method provided in embodiments of this application may be applied to various communication scenarios, for example, may be applied to one or more of the following communication scenarios: enhanced mobile broadband (enhanced mobile broadband, eMBB), ultra reliable low latency communication (ultra reliable low latency communication, URLLC), machine type communication (machine type communication, MTC), massive machine type communication (massive machine type communication, mMTC), device to device (device to device, D2D), vehicle to everything (vehicle to everything, V2X), vehicle to vehicle (vehicle to vehicle, V2V), and internet of things (internet of things, IoT).

The following describes a communication system provided in embodiments of this application. The communication system may include:

Terminal (terminal equipment): including a mobile device that supports an air interface (the air interface may be various types of air interfaces, for example, a 5G air interface), and may access a satellite network through the air interface and initiate a service like a call or internet access. The terminal may be user equipment (user equipment, UE), a mobile station (mobile station, MS), a mobile terminal (mobile terminal, MT), or the like. Specifically, the terminal may be a mobile phone (mobile phone), a tablet computer, or a computer having a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart home, a vehicle-mounted terminal, or the like. In embodiments of this application, an apparatus configured to implement a function of the terminal device may be a terminal, or may be an apparatus, for example, a chip system, that can support a terminal in implementing the function. The apparatus may be installed in the terminal or used in combination with the terminal. In embodiments of this application, an example in which the terminal is UE is used to describe the communication system.

Network device: mainly configured to implement at least one of resource scheduling, radio resource management, and radio resource control of the terminal. Specifically, the network device may include any node of a base station, a wireless access point, a transmission reception point (transmission reception point, TRP), a transmission point (transmission point, TP), and another access node. The network device and a core network device communicate with each other in a wired or wireless manner, for example, through a next generation (next generation, NG) interface. Different network devices may exchange signaling such as handover through an Xn interface. In embodiments of this application, an apparatus configured to implement a function of the network device may be a network device, or may be an apparatus, for example, a chip system, that can support a network device in implementing the function. The apparatus may be installed in the network device or used in combination with the network device. In embodiments of this application, an example in which the network device is a base station is used to describe the communication system.

Core network device: responsible for maintaining subscriber data of a mobile network, and providing functions such as session management, mobility management, policy management, and security authentication for the terminal. The core network device may include the following network elements: a user plane function (user plane function, UPF) network element, an authentication service function (authentication server function, AUSF) network element, an access and mobility management function (access and mobility management function, AMF) network element, a session management function (session management function, SMF) network element, a network exposure function (network exposure function, NEF) network element, a network repository function (network repository function, NRF) network element, a policy control function (policy control function, PCF) network element, and a unified data management (unified data management, UDM) network element. Optionally, the core network device may further include an application function (application function, AF) network element and a unified data repository (Unified Data Repository, UDR) network element. For descriptions of the foregoing network elements, refer to the conventional technology. Details are not described herein.

Terrestrial station: responsible for forwarding signaling and service data between a network device and a core network device.

In an embodiment, as shown in FIG. 1-a, in the communication system, a base station may be deployed on the ground, and is communicatively connected to a terrestrial station to receive and send signaling and service data.

In an embodiment, as shown in FIG. 1-b, in the communication system, a base station may be deployed on a satellite, and is communicatively connected to a terrestrial station through a radio link to receive and send signaling and service data.

In an embodiment, as shown in FIG. 1-c, in the communication system, a base station may be deployed on a satellite, and signaling exchange and user data transmission may be performed between base stations on different satellites through an Xn interface.

It should be noted that FIG. 1-a, FIG. 1-b, and FIG. 1-c are merely example framework diagrams, and a quantity of included nodes and a status of a terminal are not limited. In addition to the functional nodes shown in FIG. 1-a, FIG. 1-b, and FIG. 1-c, another node like a gateway device or an application server may be further included. This is not limited.

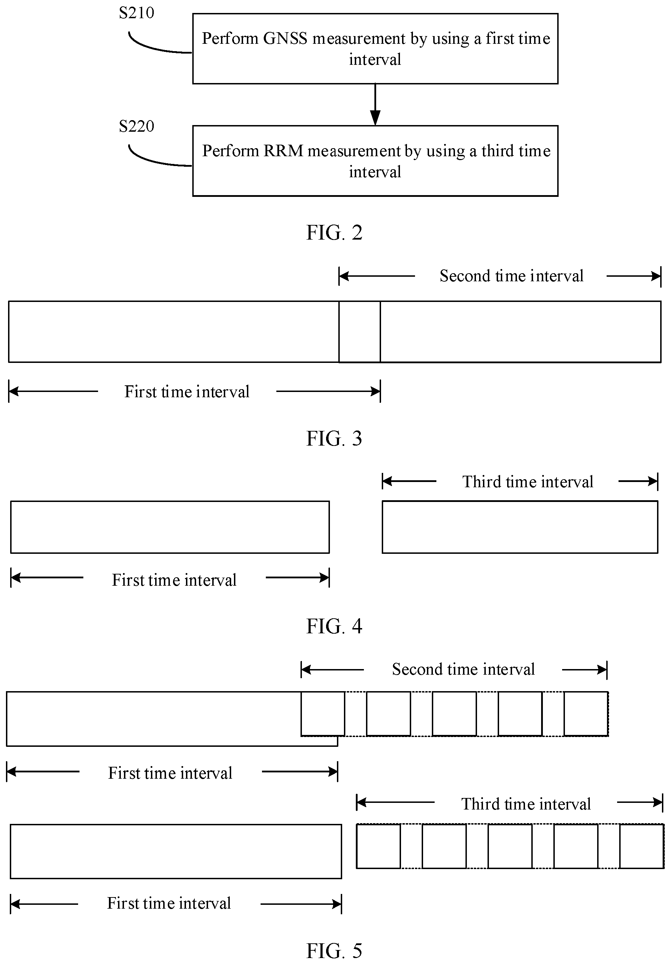

Based on the communication system provided in this embodiment of this application, an embodiment of this application further provides a communication method. The communication method is applied to a terminal. FIG. 2 is a schematic flowchart of a communication method according to an embodiment of this application. As shown in FIG. 2, the method may include the following steps.

S210: Perform GNSS measurement by using a first time interval.

The terminal is configured with the first time interval for GNSS measurement, and the terminal is further configured with a second time interval for RRM measurement. RRM measurement may be performed on a serving cell of the terminal, or may be performed on a neighboring cell of the terminal, or may be performed on both a serving cell and a neighboring cell of the terminal. In a communication scenario of this embodiment, as shown in FIG. 3, the first time interval and the second time interval at least partially overlap.

S220: Perform RRM measurement by using a third time interval.

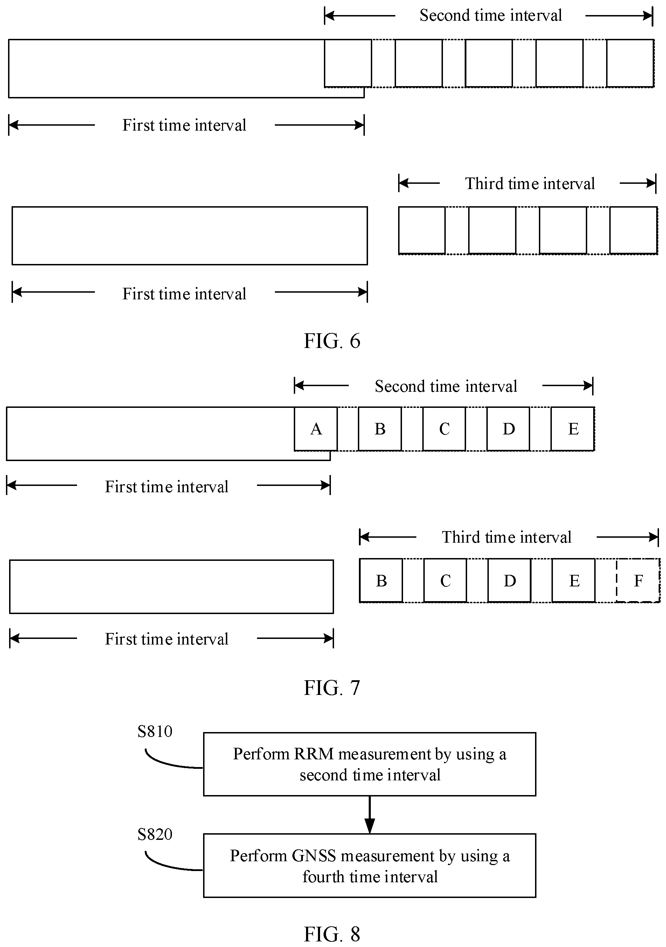

As shown in FIG. 4, the third time interval is a time interval obtained by delaying the second time interval. The second time interval includes a plurality of sub-intervals. As shown in FIG. 5, the third time interval may be a time interval obtained by delaying all of the plurality of sub-intervals. Alternatively, as shown in FIG. 6, the third time interval may further include a remaining sub-interval obtained after a sub-interval overlapping with the first time interval is removed from the plurality of sub-intervals, and the remaining sub-interval is referred to as a target sub-interval. In a scenario in which the third time interval includes the target sub-interval, if the target sub-interval is insufficient to support completion of RRM measurement, a new sub-interval may be further added after the target sub-interval, to ensure completion of RRM measurement. As shown in FIG. 7, the second time interval includes five sub-intervals: A, B, C, D, and E. The sub-interval A is removed, and a sub-interval F is supplemented. The third time interval is determined based on the second time interval and global navigation satellite system measurement. Duration spanned by the third time interval is the same as or similar to that spanned by the second time interval. For example, the third time interval may be determined based on the second time interval and a completion time of global navigation satellite system measurement. Specifically, a start time of the third time interval is later than the completion time of global navigation satellite system measurement. In this example, the start time of the third time interval may be set to a moment immediately following the completion time of global navigation satellite system measurement, or the start time of the third time interval may be set to a time that is a period of time after the completion time of global navigation satellite system measurement. The "time that is a period of time after" may be used to send GNSS measurement result information, or may be used to receive RRM measurement configuration information.

In another example, the third time interval may be determined based on the second time interval and a configuration time (that is, the first time interval) of global navigation satellite system measurement. Specifically, the third time interval is configured as a time interval that does not overlap with the first time interval. Because a time interval configured for the terminal for measurement is generally approximately equal to a measurement time required for corresponding measurement, configuring the third time interval as a time interval that does not overlap with the first time interval can generally avoid a conflict between GNSS measurement and RRM measurement.

In this embodiment of this application, when the first time interval configured for the terminal for GNSS measurement and the second time interval configured for the terminal for RRM measurement at least partially overlap, GNSS measurement is performed by using the first time interval, and RRM measurement is performed by using the third time interval that does not overlap with the first time interval. This avoids a conflict between GNSS measurement and RRM measurement, and improves a success rate of GNSS measurement and RRM measurement.

In another implementation, the third time interval is a time interval obtained by advancing the second time interval. The third time interval is determined based on the second time interval and global navigation satellite system measurement, or the third time interval may be determined based on the second time interval and a configuration time of global navigation satellite system measurement, as described above. RRM measurement may be performed in advance.

In an embodiment, as shown in FIG. 8, the method may alternatively include the following steps.

S810: Perform RRM measurement by using a second time interval.

Refer to the descriptions of S210 and S220. The terminal is configured with the first time interval for GNSS measurement, and the terminal is further configured with the second time interval for RRM measurement. Details are not described again.

S820: Perform GNSS measurement by using a fourth time interval.

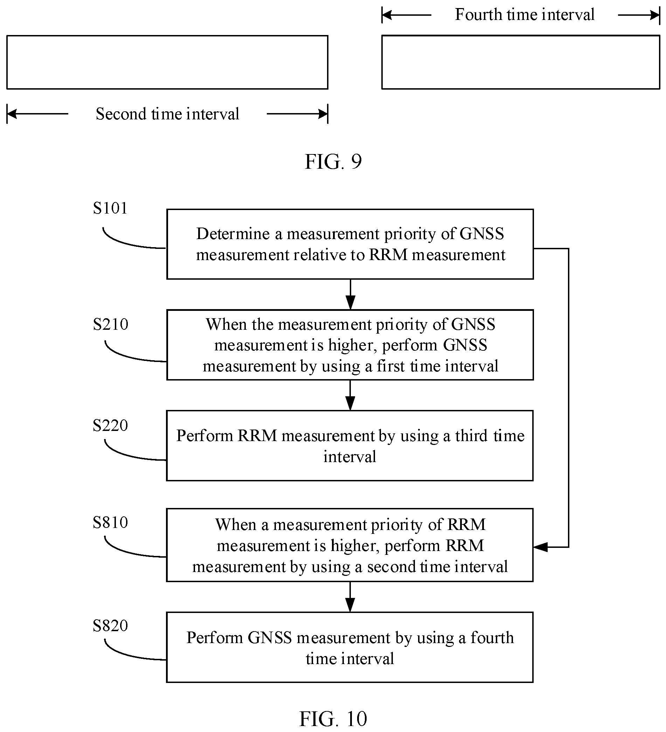

As shown in FIG. 9, the fourth time interval is a time interval obtained by delaying the first time interval, and the fourth time interval is determined based on the first time interval and a completion time of radio resource management measurement. In other words, in this embodiment, a time interval for GNSS measurement is delayed. Specifically, a start time of the fourth time interval is later than the end time of RRM measurement. For example, the start time of the fourth time interval may be set to a moment immediately following the end time of RRM measurement, or the start time of the fourth time interval may alternatively be set to a time that is a period of time after the end time of RRM measurement. Duration spanned by the fourth time interval is the same as or similar to that spanned by the first time interval.

In this embodiment of this application, when the first time interval configured for the terminal for GNSS measurement and the second time interval configured for the terminal for RRM measurement at least partially overlap, RRM measurement is performed by using the second time interval, and GNSS measurement is performed by using the fourth time interval that does not overlap with the second time interval. This avoids a conflict between GNSS measurement and RRM measurement, and improves a success rate of GNSS measurement and RRM measurement.

In an embodiment, as shown in FIG. 10, the method may further include the following steps.

S101: Determine a measurement priority.

An implementation of delaying RRM measurement and an implementation of delaying GNSS measurement are respectively described in steps S210 and S220 and steps S810 and S820. Whether to delay the second time interval for RRM measurement or the first time interval for GNSS measurement may be determined based on the measurement priority. The measurement priority represents a measurement priority of GNSS measurement relative to RRM measurement.

For example, if the measurement priority of GNSS measurement is higher than a measurement priority of RRM measurement, GNSS measurement is performed by using the first time interval, and RRM measurement is performed by using the third time interval. That is, S210 and S220 are performed.

In another example, if the measurement priority of GNSS measurement is not higher than a measurement priority of RRM measurement, RRM measurement is performed by using the second time interval, and GNSS measurement is performed by using the fourth time interval. That is, S810 and S820 are performed.

In this embodiment of this application, the delayed time interval is determined based on the measurement priority of GNSS measurement and the measurement priority of RRM measurement, thereby ensuring that measurement with a higher priority is preferentially performed.

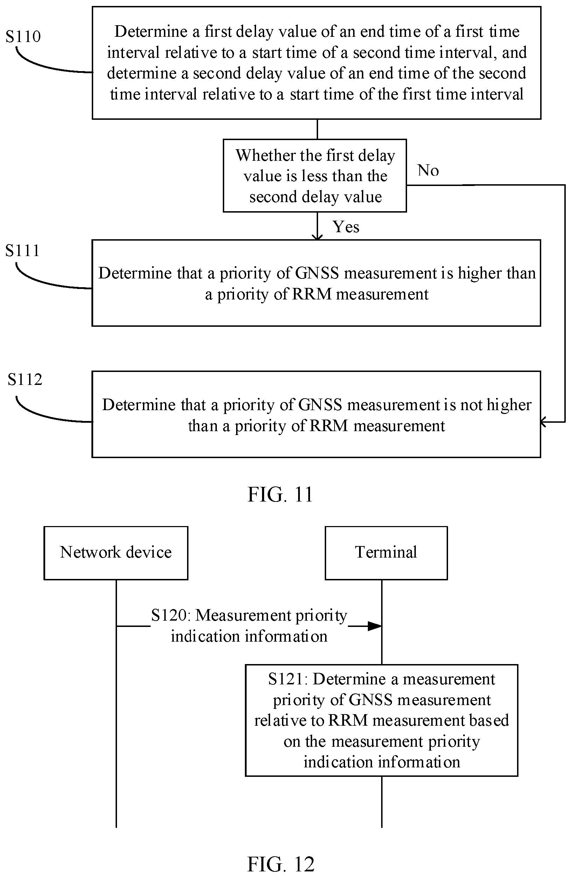

In an embodiment, as shown in FIG. 11, S101 (determine the measurement priority) may include the following steps.

S110: Determine a first delay value of an end time of the first time interval relative to a start time of the second time interval, and determine a second delay value of an end time of the second time interval relative to a start time of the first time interval.

Refer to the description of the third time interval in S220. Because a start time of the third time interval depends on the end time of GNSS measurement, the first delay value is close to a delay value of the third time interval relative to the second time interval. Similarly, refer to the description of the fourth time interval in S820. Because a start time of the fourth time interval depends on the end time of RRM measurement, the second delay value is close to a delay value of the fourth time interval relative to the first time interval. The first delay value and the second delay value may be compared to determine whether to delay RRM measurement or GNSS measurement.

In another implementation, the first delay value is determined based on the first time interval and the fourth time interval, and the second delay value is determined based on the second time interval and the third time interval.

S111: When the first delay value is less than the second delay value, determine that the priority of GNSS measurement is higher than the priority of RRM measurement.

When the first delay value is less than the second delay value, it is estimated that a delay time required for delaying GNSS measurement is greater than a delay time required for delaying RRM measurement. From a perspective of reducing the delay time, a delay policy with a smaller delay time is executed. To be specific, when the first delay value is less than the second delay value, it is determined that the priority of GNSS measurement is higher than the priority of RRM measurement, so that a type of measurement requiring a smaller delay time is delayed.

In another case, when the first delay value is not less than the second delay value, it is estimated that a delay time required for delaying GNSS measurement is not greater than a delay time required for delaying RRM measurement. From a perspective of reducing the delay time, a delay policy with a smaller delay time is executed. To be specific, when the first delay value is not less than the second delay value, it is determined that the priority of GNSS measurement is not higher than the priority of RRM measurement, so that a type of measurement requiring a smaller delay time is delayed. This embodiment includes the following step. S112: Determine that the priority of GNSS measurement is not higher than the priority of RRM measurement. Details are not described again.

In this embodiment of this application, the priority of GNSS measurement and the priority of RRM measurement are determined based on the first delay value of the third time interval relative to the second time interval and the second delay value of the fourth time interval relative to the first time, so that a delay time can be reduced.

In an embodiment, as shown in FIG. 12, S101 (determine the measurement priority) may include the following steps.

S120: Receive measurement priority indication information from a network device.

The network device is configured with the measurement priority indication information based on a communication scenario requirement or a user setting. For example, the measurement priority indication information may indicate that the measurement priority of GNSS measurement is higher, or may indicate that the measurement priority of RRM measurement is higher. Information composition of the measurement priority indication information may be flexibly set. This is not limited. For example, when the measurement priority indication information is 1, it indicates that the measurement priority of GNSS measurement is higher; or when the measurement priority indication information is 0, it indicates that the measurement priority of RRM measurement is higher. In another example, when the measurement priority indication information is 10, it indicates that the measurement priority of GNSS measurement is higher; or when the measurement priority indication information is 01, it indicates that the measurement priority of RRM measurement is higher.

In still another example, the measurement priority indication information may further indicate the measurement priority of GNSS measurement and the measurement priority of RRM measurement. For example, the measurement priority indication information indicates that the measurement priority of GNSS measurement is 1, the measurement priority of RRM measurement is 2, and the priority of 1 is higher than the priority of 2.

S121: Determine the measurement priority of GNSS measurement relative to RRM measurement based on the measurement priority indication information.

In this embodiment of this application, the measurement priority of GNSS measurement and the measurement priority of RRM measurement are indicated by the network device, thereby ensuring that measurement with a higher priority is preferentially performed.

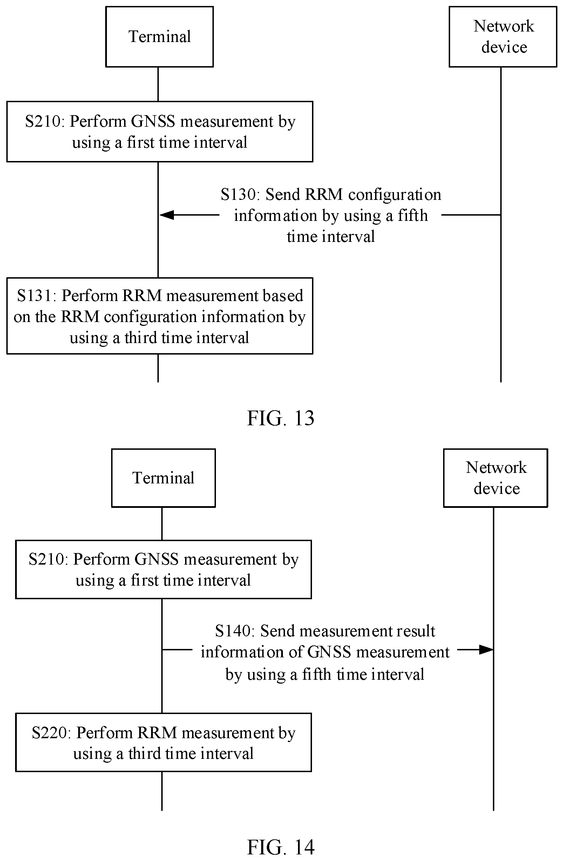

In an embodiment, as shown in FIG. 13, the method may further include the following steps.

S130: Receive RRM configuration information from the network device by using a fifth time interval.

The fifth time interval is a time interval between the start time of the third time interval and the end time of GNSS measurement, and may be used to receive the RRM configuration information from the network device.

Optionally, if the fifth time interval is excessively short, reception of the RRM configuration information may not be completed. Therefore, a first time threshold is set to determine whether to use the fifth time interval to receive the RRM configuration information. Specifically, if the fifth time interval is greater than the first time threshold, it indicates that reception of the RRM configuration information can be completed within the fifth time interval. In this case, the RRM configuration information is received, to ensure that the RRM configuration information is latest RRM configuration information. The first time threshold may be flexibly set based on a time required for receiving the RRM configuration information.

In this embodiment, S220 (perform RRM measurement by using the third time interval) may include the following steps.

S131: Perform RRM measurement based on the RRM configuration information by using the third time interval.

Latest RRM configuration information is received in S130, and RRM measurement is performed based on the RRM configuration information by using the third time interval, thereby improving accuracy of RRM measurement.

In this embodiment of this application, the RRM configuration information is received by using the fifth time interval, thereby improving time utilization. In addition, RRM measurement is performed based on the received RRM configuration information, and the received RRM configuration information has superior timeliness, so that the accuracy of RRM measurement is improved.

In an embodiment, the fifth time interval is not greater than the first time threshold. In this case, the terminal may perform RRM measurement by using RRM configuration information that is sent by the network device and that has inferior timeliness.

In an embodiment, as shown in FIG. 14, the method may further include the following step.

S140: Send measurement result information of GNSS measurement to the network device by using the fifth time interval.

The terminal may send the measurement result information of GNSS measurement by using the fifth time interval.

Optionally, the first time threshold may be further set to determine whether to perform S140. Specifically, if the fifth time interval is greater than the first time threshold, it indicates that sending of the measurement result information of the GNSS measurement can be completed within the fifth time interval. In this case, the measurement result information of GNSS measurement is sent by using the fifth time interval. The first time threshold may be flexibly set based on a time required for sending the measurement result information of GNSS measurement.

In this embodiment of this application, the measurement result information of GNSS measurement is sent to the network device by using the fifth time interval, so that time utilization is improved, and the network device can obtain the measurement result information of GNSS measurement in a timely manner.

In an embodiment, the fifth time interval is not greater than the first time threshold. In this case, the terminal may send the measurement result information of GNSS measurement to the network device after completing RRM measurement, to ensure the success of RRM measurement.

In an embodiment, the method may further include the following step.

Discard at least one measurement result in a plurality of first measurement results.

The terminal obtains a plurality of first measurement results of a plurality of time intervals through RRM measurement before the first time interval. Because RRM measurement is periodic, a plurality of first measurement results of a plurality of time intervals may have been obtained through measurement before the first time interval. If RRM measurement is delayed, RRM measurement is performed by using the third time interval. Due to a specific timeliness requirement of RRM measurement, some first measurement results in the plurality of first measurement results obtained through measurement before the first time interval are already invalid. In this case, the invalid first measurement results in the plurality of first measurement results may be discarded, and re-measurement is performed by using the third time interval.

For example, for how to determine whether a first measurement result is valid, in RRM measurement, a plurality of measurement objects are usually measured. If all measurement for the measurement objects is completed before the first time interval, it is considered that a first measurement result corresponding to the measurement objects is valid. If only a part of measurement for the measurement objects is completed before the first time interval, and measurement continuity is broken, it is considered that the first measurement result corresponding to the measurement object is invalid.

The foregoing mechanism for determining whether the first measurement result is invalid is merely an example for description. In specific implementation, another determining mechanism may be flexibly set. This is not limited.

In this embodiment of this application, the invalid measurement result in the plurality of first measurement results obtained through measurement before the first time interval is discarded, to ensure the accuracy of RRM measurement.

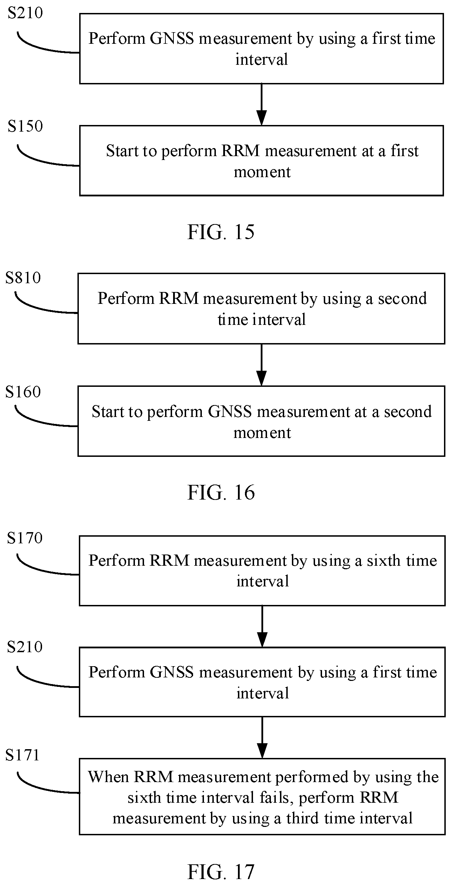

In an embodiment, as shown in FIG. 15, when GNSS measurement is completed by using the first time interval, S220 (perform RRM measurement by using the third time interval) may include the following step.

S150: Start to perform RRM measurement at a first moment.

The first moment is a start moment of the third time interval. Refer to the description of the third time interval in S220. The first moment is determined based on a completion moment of GNSS measurement. The first moment may be set to the completion moment of GNSS measurement, or the first moment may be set to a moment obtained by delaying the completion moment of GNSS measurement by a second time threshold.

The completion moment of GNSS measurement is in the first time interval, and may be earlier than the end time of the first time interval. RRM measurement starts to be performed at the completion moment of GNSS measurement (that is, the first moment is set to the completion moment of GNSS measurement), so that RRM measurement can be completed in advance.

However, when RRM measurement starts to be performed at the moment obtained by delaying the completion moment of GNSS measurement by the second time threshold, during the delayed second time threshold, with reference to the descriptions of the embodiment shown in FIG. 13 and the embodiment shown in FIG. 14, within a time interval (namely, the fifth time interval) between the first moment and the completion moment of GNSS measurement, the terminal may send the measurement result information of GNSS measurement to the network device (and/or receive the RRM configuration information from the network device). Optionally, if the network device does not receive the measurement result information of GNSS measurement within the fifth time interval, the network device determines that GNSS measurement performed by the terminal fails, and the terminal enters an idle (idle) mode.

In this embodiment of this application, when GNSS measurement is completed by using the first time interval, RRM measurement starts to be performed at the first moment, to ensure that RRM measurement is performed in time.

In an embodiment, as shown in FIG. 16, when RRM measurement is completed by using the second time interval, S820 (perform GNSS measurement by using the fourth time interval) may include the following step.

S160: Start to perform GNSS measurement at a second moment.

The second moment is a start moment of the fourth time interval, and the second moment is determined based on a completion moment of RRM measurement. The second moment is the completion moment of RRM measurement, or the second moment is a moment obtained by delaying the completion moment of RRM measurement by a third time threshold.

The completion moment of RRM measurement is in the second time interval, and may be earlier than the end time of the second time interval. GNSS measurement starts to be performed at the completion moment of RRM measurement (that is, the second moment is set to the completion moment of RRM measurement), so that RRM measurement can be completed in advance.

However, when GNSS measurement is started at a moment obtained by delaying the completion moment of RRM measurement by the third time threshold, a measurement result of RRM measurement may be sent to the network device within the delayed time interval.

In this embodiment of this application, when RRM measurement is completed by using the second time interval, GNSS measurement is started at the second moment, to ensure that GNSS measurement is performed in time.

In this embodiment of this application, when the first time interval configured for the terminal for GNSS measurement and the second time interval configured for the terminal for RRM measurement at least partially overlap, GNSS measurement is performed by using the first time interval, and RRM measurement is performed by using the third time interval that does not overlap with the first time interval (or RRM measurement is performed by using the second time interval, and GNSS measurement is performed by using the fourth time interval that does not overlap with the second time interval). This avoids a conflict between GNSS measurement and RRM measurement, and improves a success rate of GNSS measurement and RRM measurement.

In an embodiment, as shown in FIG. 17, the method may further include the following step.

S170: Perform RRM measurement by using a sixth time interval.

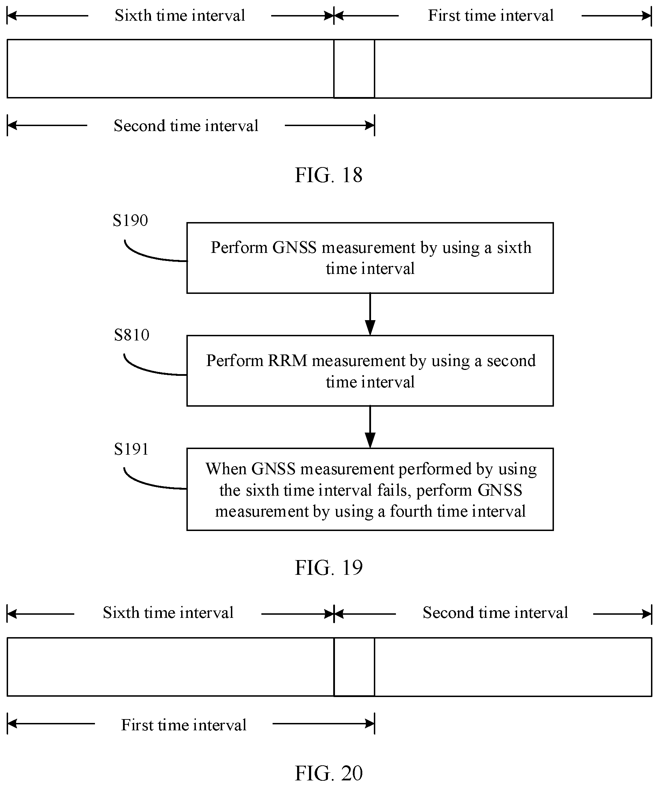

The sixth time interval is a time interval between the start time of the first time interval and the start time of the second time interval. In this embodiment, FIG. 18 shows a communication scenario in which GNSS measurement is performed by using the first time interval, and the start time of the first time interval is later than the start time of the second time interval. In other words, the sixth time interval is a part that is of the second time interval and that does not overlap with the first time interval. RRM measurement is performed by using the sixth time interval. If the terminal has a strong measurement capability, RRM measurement may be completed within the sixth time interval, thereby improving efficiency of RRM measurement. For a case in which RRM measurement cannot be completed within the sixth time interval, refer to the following description of S171.

In this embodiment, S220 (perform RRM measurement by using the third time interval) may include the following step.

S171: When RRM measurement performed by using the sixth time interval fails, perform RRM measurement by using the third time interval.

If RRM measurement cannot be completed within the sixth time interval, RRM measurement may be continued by using the third time interval, to ensure that RRM measurement can be completed.

In this embodiment of this application, RRM measurement is performed by using the sixth time interval, and when RRM measurement cannot be completed within the sixth time interval, RRM measurement is continued by using the third time interval. This can ensure that RRM measurement can be completed.

In an embodiment, as shown in FIG. 19, the method may further include the following step.

S190: Perform GNSS measurement by using a sixth time interval.

The sixth time interval is a time interval between a start time of the first time interval and a start time of the second time interval. As shown in FIG. 20, a communication scenario in this embodiment is as follows: RRM measurement is performed by using the second time interval, and the start time of the first time interval is earlier than the start time of the second time interval. In other words, the sixth time interval is a part that is of the first time interval and that does not overlap with the second time interval. GNSS measurement is performed by using the sixth time interval. If the terminal has a strong measurement capability, the measurement may be completed within the sixth time interval, thereby improving efficiency of GNSS measurement. For a case in which GNSS measurement cannot be completed within the sixth time interval, refer to the following description of S191.

In this embodiment, S820 (perform GNSS measurement by using the fourth time interval) may include the following step.

S191: When GNSS measurement performed by using the sixth time interval fails, perform GNSS measurement by using the fourth time interval.

If GNSS measurement cannot be completed within the sixth time interval, GNSS measurement may be continued by using the third time interval, to ensure that GNSS measurement can be completed.

In this embodiment of this application, GNSS measurement is performed by using the sixth time interval, and when GNSS measurement cannot be completed within the sixth time interval, GNSS measurement is continued by using the third time interval. This can ensure that GNSS measurement can be completed.

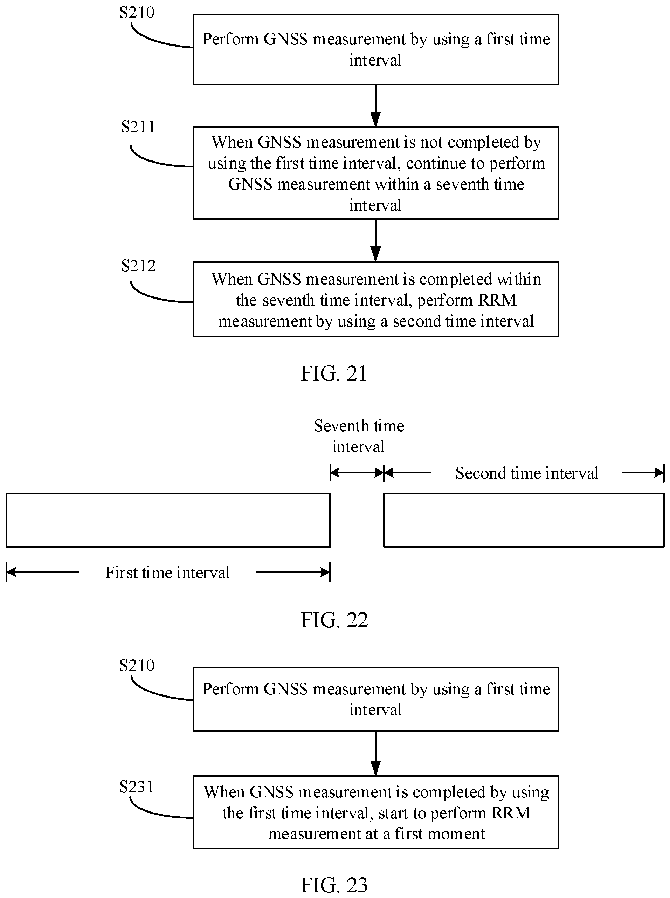

The foregoing embodiment describes an implementation for measurement when there is a conflict between a time interval for GNSS measurement and a time interval for RRM measurement. For a communication scenario in which there is no conflict between a time interval for GNSS measurement and a time interval for RRM measurement, an embodiment of this application further provides a communication method. As shown in FIG. 21, the method may include the following steps.

S210: A terminal performs GNSS measurement by using a first time interval.

The terminal is configured with the first time interval for GNSS measurement, and is further configured with a second time interval for RRM measurement. As shown in FIG. 22, there is a seventh time interval interposed between the first time interval and the second time interval. In other words, there is no conflict between GNSS measurement and RRM measurement.

S211: When GNSS measurement is not completed by using the first time interval, the terminal continues to perform GNSS measurement within the seventh time interval.

Due to a limitation in a measurement capability of the terminal, the terminal may fail to complete GNSS measurement within the configured first time interval. In this case, the terminal may continue to perform GNSS measurement within the seventh time interval interposed between the first time interval and the second time interval, to further ensure a success rate of GNSS measurement.

S212: When GNSS measurement is completed within the seventh time interval, the terminal performs RRM measurement by using the second time interval.

If GNSS measurement is completed within the seventh time interval, RRM measurement is performed by using the second time interval, to ensure that both GNSS measurement and RRM measurement can be completed. For a case in which the terminal does not complete GNSS measurement within the seventh time interval, the terminal may enter an idle mode. In this case, if a network device does not receive measurement result information of GNSS measurement within the seventh time interval, the network device determines that GNSS measurement performed by the terminal fails, and the terminal enters the idle (idle) mode.

In an embodiment, the second time interval may be further delayed (equivalent to the third time interval in step S220) until GNSS measurement is completed. After GNSS measurement is completed, RRM measurement is performed by using the delayed second time interval. For a specific description, refer to the description of S220. Details are not described again.

In this embodiment of this application, in the scenario in which the time interval for GNSS measurement does not overlap with the time interval for RRM measurement, the seventh time interval interposed between the first time interval and the second time interval is used to continue to perform GNSS measurement, thereby further ensuring the success rate of GNSS measurement.

In an embodiment, as shown in FIG. 23, the method may further include the following step.

S231: When GNSS measurement is completed by using the first time interval, the terminal starts to perform RRM measurement at a first moment.

Refer to the description of S150. The communication scenario in this embodiment is similar to that in S150. In this embodiment, the first moment is a start time of the advanced second time interval. The first moment is determined based on a completion moment of GNSS measurement. The first moment may be set to the completion moment of GNSS measurement, or the first moment may be set to a moment obtained by delaying the completion moment of GNSS measurement by a second time threshold.

The completion moment of GNSS measurement is in the first time interval, and may be earlier than an end time of the first time interval. RRM measurement starts to be performed at the completion moment of GNSS measurement (that is, the first moment is set to the completion moment of GNSS measurement), so that RRM measurement can be completed in advance.

However, when RRM measurement starts to be performed at the moment obtained by delaying the completion moment of GNSS measurement by the second time threshold, during the delayed second time threshold, within a time interval (referred to as a fifth time interval) between the first moment and the completion moment of GNSS measurement, the terminal may send measurement result information of GNSS measurement to the network device (and/or receive RRM configuration information from the network device). If the network device does not receive the measurement result information of GNSS measurement within the fifth time interval, the network device determines that GNSS measurement performed by the terminal fails, and the terminal enters an idle (idle) mode.

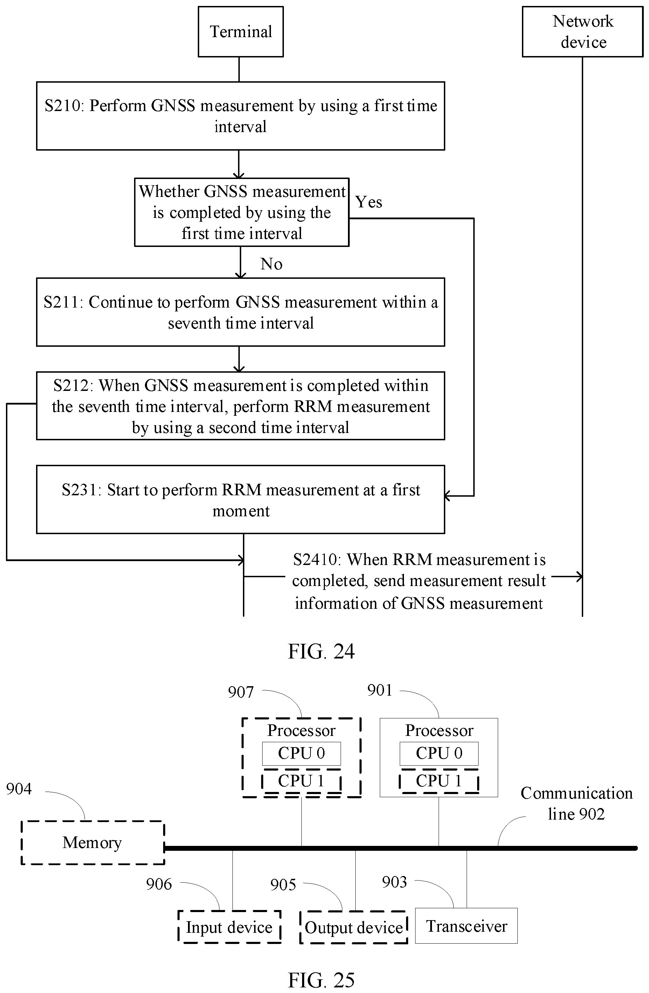

In an embodiment, as shown in FIG. 24, the method may further include the following step.

S2410: When completing RRM measurement, the terminal sends the measurement result information of GNSS measurement to the network device.

The terminal may send the measurement result information of GNSS measurement when completing RRM measurement.

Optionally, if the terminal sends the measurement result information of GNSS measurement when completing RRM measurement, a delay in sending the measurement result information of the measurement is long. Therefore, a fourth time threshold may be set to determine whether to perform S2410. Specifically, the fourth time threshold is a time threshold determined based on a time required for sending the measurement result information of GNSS measurement. If the seventh time interval is less than the fourth time threshold, it indicates that sending of the measurement result information of GNSS measurement cannot be completed within the seventh time interval. In this case, the measurement result information of GNSS measurement is not sent within the seventh time interval. Instead, the measurement result information of GNSS measurement is sent to the network device when RRM measurement is completed, thereby ensuring that the measurement result information of GNSS measurement is successfully sent. If the seventh time interval is not less than the fourth time threshold, the measurement result information of GNSS measurement may be sent within the seventh time interval, and a sending delay is low.

In this embodiment of this application, in the scenario in which the time interval for GNSS measurement does not overlap with the time interval for RRM measurement, the seventh time interval interposed between the first time interval and the second time interval is flexibly used, thereby further ensuring the success rate of GNSS measurement.

The foregoing mainly describes the solutions provided in embodiments of this application from a perspective of execution logic of each step. It may be understood that, to implement the foregoing functions, each node, for example, the terminal, includes a corresponding hardware structure and/or a corresponding software module for performing each function. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal may be divided into functional modules based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that module division in embodiments of this application is an example, and is merely logical function division. There may be another division manner in actual implementation.

In specific implementation, each network element, for example, the terminal, shown in this application may use a composition structure shown in FIG. 25, or include components shown in FIG. 25. FIG. 25 is a diagram of a structure of a communication apparatus according to an embodiment of this application. When the communication apparatus has functions of the terminal in embodiments of this application, the communication apparatus may be a terminal, or a chip or a system-on-a-chip in a terminal. When the communication apparatus has functions of the network device in embodiments of this application, the communication apparatus may be a network device, or a chip or a system-on-a-chip in a network device.

As shown in FIG. 25, the communication apparatus may include a processor 901, a communication line 902, a transceiver 903, and a memory 904. The processor 901, the memory 904, and the transceiver 903 may be connected through the communication line 902. In an example, the processor 901 may include one or more CPUs, for example, a CPU 0 and a CPU 1 in FIG. 25.

In an optional implementation, the communication apparatus includes a plurality of processors. For example, in addition to the processor 901 in FIG. 25, the communication apparatus may further include a processor 907.

The processor 901 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 901 may be another apparatus having a processing function, for example, a circuit, a device, or a software module.

The communication line 902 is configured to transmit information between the components included in the communication apparatus.

The transceiver 903 is configured to communicate with another device or another communication network. The another communication network may be an Ethernet, a radio access network (radio access network, RAN), a wireless local area network (wireless local area network, WLAN), or the like. The transceiver 903 may be an interface circuit, a pin, a radio frequency module, a transceiver, or any apparatus that can implement communication.

Further, the communication apparatus may include the memory 904. The memory 904 is configured to store instructions. The instructions may be a computer program.

The memory 904 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage, or a magnetic disk storage medium or another magnetic storage device. The optical disc storage includes a compact disc, a laser disc, an optical disc, a digital versatile disc, a Blu-ray disc, or the like.

It should be noted that the memory 904 may exist independently of the processor 901, or may be integrated with the processor 901. The memory 904 may be configured to store instructions, program code, some data, or the like. The memory 904 may be located inside the communication apparatus, or may be located outside the communication apparatus. This is not limited. When executing the instructions stored in the memory 904, the processor 901 may implement the method provided in embodiments of this application.

In an optional implementation, the communication apparatus further includes an output device 905 and an input device 906. For example, the input device 906 is a device like a keyboard, a mouse, a microphone, or a joystick, and the output device 905 is a device like a display or a speaker (speaker).

It should be noted that the communication apparatus may be a desktop computer, a portable computer, a network server, a mobile phone, a tablet computer, a wireless terminal, an embedded device, a chip system, or a device having a structure similar to that in FIG. 25. In addition, the composition structure shown in FIG. 25 does not constitute a limitation on the communication apparatus. In addition to the components shown in FIG. 25, the communication apparatus may include more or fewer components than those shown in the figure, or some components may be combined, or different component arrangements may be used.

In this embodiment of this application, the chip system may include a chip, or may include a chip and another discrete device.

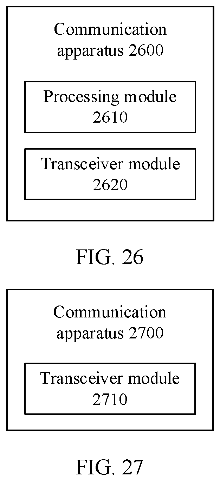

FIG. 26 is a diagram of a structure of a communication apparatus 2600. The communication apparatus 2600 is used in a terminal, the terminal is configured with a first time interval for global navigation satellite system measurement, and the terminal is configured with a second time interval for radio resource management measurement. Modules in the apparatus shown in FIG. 26 have functions of implementing corresponding steps in FIG. 3 to FIG. 24, and can achieve corresponding technical effects. For beneficial effects corresponding to steps performed by the modules, refer to the descriptions of the corresponding steps in FIG. 3 to FIG. 24. Details are not described again. The function may be implemented by hardware, or may be implemented by hardware executing corresponding software. The hardware or the software includes one or more modules corresponding to the functions. The communication apparatus 2600 may be a terminal, or a chip or a system-on-a-chip in a terminal. For example, the communication apparatus 2600 includes:
a processing module 2610, configured to: perform global navigation satellite system measurement by using the first time interval, and perform radio resource management measurement by using a third time interval. The third time interval is a time interval obtained by delaying the second time interval, and the third time interval is determined based on the second time interval and a completion time of global navigation satellite system measurement. Alternatively, the processing module 2610 is further configured to: perform radio resource management measurement by using the second time interval, and perform global navigation satellite system measurement by using a fourth time interval. The fourth time interval is a time interval obtained by delaying the first time interval, and the fourth time interval is determined based on the first time interval and a completion time of radio resource management measurement.

In an embodiment, the processing module 2610 is further configured to determine a measurement priority of global navigation satellite system measurement and a measurement priority of radio resource management measurement. The processing module 2610 is specifically configured to: when the measurement priority of global navigation satellite system measurement is higher than the measurement priority of radio resource management measurement, perform global navigation satellite system measurement by using the first time interval, and perform radio resource management measurement by using the third time interval. The processing module 2610 is further specifically configured to: when the measurement priority of global navigation satellite system measurement is not higher than the measurement priority of radio resource management measurement, perform radio resource management measurement by using the second time interval, and perform global navigation satellite system measurement by using the fourth time interval.

In an embodiment, the processing module 2610 is specifically configured to: determine a first delay value of an end time of the first time interval relative to a start time of the second time interval, and determine a second delay value of an end time of the second time interval relative to a start time of the first time interval; when the first delay value is less than the second delay value, determine that the priority of global navigation satellite system measurement is higher than the priority of radio resource management measurement; and when the first delay value is not less than the second delay value, determine that the priority of global navigation satellite system measurement is not higher than the priority of radio resource management measurement.

In an embodiment, the apparatus further includes a transceiver module 2620. The processing module 2610 is specifically configured to invoke the transceiver module 2620 to receive measurement priority indication information, where the measurement priority indication information indicates the measurement priority of global navigation satellite system measurement and the measurement priority of radio resource management measurement. The processing module 2610 is further specifically configured to determine the measurement priority of global navigation satellite system measurement and the measurement priority of radio resource management measurement based on the measurement priority indication information.

In an embodiment, a fifth time interval between a start time of the third time interval and the completion time of global navigation satellite system measurement is greater than a first time threshold. The apparatus further includes the transceiver module 2620. The processing module 2610 is further configured to invoke the transceiver module 2620 to receive radio resource management configuration information by using the fifth time interval. The processing module 2610 is specifically configured to perform radio resource management measurement based on the radio resource management configuration information by using the third time interval.

In an embodiment, the fifth time interval between the start time of the third time interval and the completion time of global navigation satellite system measurement is greater than the first time threshold. The apparatus further includes the transceiver module 2620. The processing module 2610 is further configured to invoke the transceiver module 2620 to send measurement result information of global navigation satellite system measurement by using the fifth time interval.

In an embodiment, the terminal obtains a plurality of first measurement results of a plurality of time intervals through radio resource management measurement before the first time interval. The processing module 2610 is further configured to discard at least one measurement result in the plurality of first measurement results.

In an embodiment, the second time interval includes a plurality of sub-intervals. The third time interval is a time interval obtained by delaying all of the plurality of sub-intervals. Alternatively, the third time interval includes a target sub-interval. The target sub-interval includes a sub-interval obtained after a sub-interval overlapping with the first time interval is removed from the plurality of sub-intervals.

In an embodiment, the processing module 2610 is further configured to: when global navigation satellite system measurement is completed by using the first time interval, start to perform radio resource management measurement at a first moment, where the first moment is determined based on a completion moment of global navigation satellite system measurement; and after radio resource management measurement is terminated by using the second time interval, start to perform global navigation satellite system measurement at a second moment, where the second moment is determined based on a completion moment of radio resource management measurement. In an embodiment, the first moment is the completion moment of global navigation satellite system measurement, or the first moment is a moment obtained by delaying the completion moment of global navigation satellite system measurement by a second time threshold. The second moment is the completion moment of radio resource management measurement, or the second moment is a moment obtained by delaying the completion moment of radio resource management measurement by a third time threshold.

In another example, the processing module 2610 and the transceiver module 2620 may be further configured to perform the following steps.

The processing module 2610 is configured to perform global navigation satellite system measurement by using the first time interval. The processing module 2610 is further configured to: when global navigation satellite system measurement is not completed by using the first time interval, continue to perform global navigation satellite system measurement within a seventh time interval. The processing module 2610 is further configured to: when global navigation satellite system measurement is completed within the seventh time interval, perform radio resource management measurement by using the second time interval. The processing module 2610 is further configured to enter an idle mode when global navigation satellite system measurement is not completed within the seventh time interval.

In an embodiment, the seventh time interval is less than a fourth time threshold, and the transceiver module 2620 is further configured to: after radio resource management measurement is terminated, send measurement result information of global navigation satellite system measurement.

FIG. 27 is a diagram of a structure of a communication apparatus 2700. The communication apparatus 2700 is used in a network device. Modules in the apparatus shown in FIG. 27 have functions of implementing corresponding steps in FIG. 3 to FIG. 24, and can achieve corresponding technical effects. For beneficial effects corresponding to steps performed by the modules, refer to the descriptions of the corresponding steps in FIG. 3 to FIG. 24. Details are not described again. The function may be implemented by hardware, or may be implemented by hardware executing corresponding software. The hardware or the software includes one or more modules corresponding to the functions. The communication apparatus 2700 may be a network device, or a chip or a system-on-a-chip in a network device. For example, the communication apparatus 2700 includes:
a transceiver module 2710, configured to send measurement priority indication information to a terminal.

The measurement priority indication information indicates a measurement priority of global navigation satellite system measurement and a measurement priority of radio resource management measurement, the terminal is configured with a first time interval for global navigation satellite system measurement, the terminal is configured with a second time interval for radio resource management measurement, and the first time interval and the second time interval at least partially overlap.

Embodiments of this application further provide a computer-readable storage medium. All or some of procedures in the foregoing method embodiments may be completed by a computer program instructing related hardware. The program may be stored in the foregoing computer-readable storage medium, and when the program is executed, the procedures in the foregoing method embodiments may be included. The computer-readable storage medium may be an internal storage unit of the terminal apparatus, for example, including a data transmit end and/or a data receive end according to any one of the foregoing embodiments, for example, a hard disk or a memory of the terminal apparatus. Alternatively, the computer-readable storage medium may be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides a computer instruction. All or some of the procedures in the foregoing method embodiments may be completed by the computer instruction instructing related hardware (for example, a computer, a processor, a network device, and a terminal). The program may be stored in the foregoing computer-readable storage medium.

An embodiment of this application further provides a chip system. The chip system may include a chip, or may include a chip and another discrete device. This is not limited. The chip system includes a processor and a transceiver. All or some of the procedures in the foregoing method embodiments may be completed by the chip system. For example, the chip system may be configured to implement the functions performed by the terminal or the network device in the foregoing method embodiments.

In a possible design, the chip system further includes a memory. The memory is configured to store program instructions and/or data. When the chip system runs, the processor executes the program instructions stored in the memory, so that the chip system performs the functions performed by the terminal or the network device in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. Alternatively, the memory in embodiments of this application may be a circuit or any other apparatus that can implement a storage function, and is configured to store instructions and/or data.

The foregoing descriptions of implementations allow a person skilled in the art to clearly understand that, for the purpose of convenient and brief description, division into the foregoing functional modules is merely used as an example for illustration. In actual application, the foregoing functions can be allocated to different modules for implementation based on a requirement, that is, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. Indirect couplings or communication connections between apparatuses or units may be implemented in an electronic form, a mechanical form, or another form.

The units described as separate parts may be or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes several instructions for instructing a device, for example, a single-chip microcomputer or a chip, or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method is applied to a terminal, the terminal is configured with a first time interval for global navigation satellite system measurement, the terminal is configured with a second time interval for radio resource management measurement, the first time interval and the second time interval at least partially overlap, and the method comprises:
performing global navigation satellite system measurement by using the first time interval, and performing radio resource management measurement by using a third time interval, wherein the third time interval is a time interval obtained by delaying the second time interval, and the third time interval is determined based on the second time interval and global navigation satellite system measurement; or
performing radio resource management measurement by using the second time interval, and performing global navigation satellite system measurement by using a fourth time interval, wherein the fourth time interval is a time interval obtained by delaying the first time interval, and the fourth time interval is determined based on the first time interval and radio resource management measurement.

2. The communication method according to claim 1, wherein the method further comprises:
determining a measurement priority of global navigation satellite system measurement and a measurement priority of radio resource management measurement, wherein
performing global navigation satellite system measurement by using the first time interval, and performing radio resource management measurement by using the third time interval comprise:
when the measurement priority of global navigation satellite system measurement is higher than the measurement priority of radio resource management measurement, performing global navigation satellite system measurement by using the first time interval, and performing radio resource management measurement by using the third time interval; and
performing radio resource management measurement by using the second time interval, and performing global navigation satellite system measurement by using the fourth time interval comprise:
when the measurement priority of global navigation satellite system measurement is not higher than the measurement priority of radio resource management measurement, performing radio resource management measurement by using the second time interval, and performing global navigation satellite system measurement by using the fourth time interval.

3. The communication method according to claim 2, wherein determining the measurement priority of global navigation satellite system measurement and the measurement priority of radio resource management measurement comprises:
determining a first delay value of an end time of the first time interval relative to a start time of the second time interval, and determining a second delay value of an end time of the second time interval relative to a start time of the first time interval; and
when the first delay value is less than the second delay value, determining that the priority of global navigation satellite system measurement is higher than the priority of radio resource management measurement; otherwise, determining that the priority of global navigation satellite system measurement is not higher than the priority of radio resource management measurement.

4. The communication method according to claim 2, wherein determining the measurement priority of global navigation satellite system measurement and the measurement priority of radio resource management measurement comprises:
receiving measurement priority indication information, wherein the measurement priority indication information indicates the measurement priority of global navigation satellite system measurement and the measurement priority of radio resource management measurement; and
determining the measurement priority of global navigation satellite system measurement and the measurement priority of radio resource management measurement based on the measurement priority indication information.

5. The communication method according to any one of claims 1 to 4, wherein a fifth time interval between a start time of the third time interval and a completion time of global navigation satellite system measurement is greater than a first time threshold, and the method further comprises:
receiving radio resource management configuration information by using the fifth time interval, wherein
performing radio resource management measurement by using the third time interval comprises:
performing radio resource management measurement based on the radio resource management configuration information by using the third time interval.

6. The communication method according to any one of claims 1 to 5, wherein the fifth time interval between the start time of the third time interval and the completion time of global navigation satellite system measurement is greater than the first time threshold, and the method further comprises:
sending measurement result information of global navigation satellite system measurement by using the fifth time interval; or
the fifth time interval is not greater than the first time threshold, and the method further comprises:
after radio resource management measurement is terminated, sending measurement result information of global navigation satellite system measurement.

7. The communication method according to any one of claims 1 to 6, wherein the terminal obtains a plurality of first measurement results of a plurality of time intervals through radio resource management measurement before the first time interval, and the method further comprises:
discarding at least one measurement result in the plurality of first measurement results.

8. The communication method according to any one of claims 1 to 6, wherein the second time interval comprises a plurality of sub-intervals; and
the third time interval is a time interval obtained by delaying all of the plurality of sub-intervals; or
the third time interval comprises a target sub-interval, and the target sub-interval comprises a sub-interval obtained after a sub-interval overlapping with the first time interval is removed from the plurality of sub-intervals.

9. The communication method according to any one of claims 1 to 8, wherein when global navigation satellite system measurement is completed by using the first time interval, performing radio resource management measurement by using the third time interval comprises:
starting to perform radio resource management measurement at a first moment, wherein the first moment is determined based on a completion moment of global navigation satellite system measurement; and
after radio resource management measurement is terminated by using the second time interval, performing global navigation satellite system measurement by using the fourth time interval comprises:
starting to perform global navigation satellite system measurement at a second moment, wherein the second moment is determined based on a completion moment of radio resource management measurement.

10. The communication method according to claim 9, wherein the first moment is the completion moment of global navigation satellite system measurement, or the first moment is a moment obtained by delaying the completion moment of global navigation satellite system measurement by a second time threshold; and
the second moment is the completion moment of radio resource management measurement, or the second moment is a moment obtained by delaying the completion moment of radio resource management measurement by a third time threshold.

11. The communication method according to any one of claims 1 to 10, wherein when global navigation satellite system measurement is performed by using the first time interval, and the start time of the first time interval is later than the start time of the second time interval, the method further comprises:
performing radio resource management measurement by using a sixth time interval, wherein the sixth time interval is a time interval between the start time of the first time interval and the start time of the second time interval; and
performing radio resource management measurement by using the third time interval comprises:
when radio resource management measurement performed by using the sixth time interval fails, performing radio resource management measurement by using the third time interval.

12. The communication method according to claim 1, wherein when radio resource management measurement is performed by using the second time interval and a start time of the first time interval is earlier than a start time of the second time interval, the method further comprises:
performing global navigation satellite system measurement by using a sixth time interval, wherein the sixth time interval is a time interval between the start time of the first time interval and the start time of the second time interval; and
performing global navigation satellite system measurement by using the fourth time interval comprises:
when global navigation satellite system measurement performed by using the sixth time interval fails, performing global navigation satellite system measurement by using the fourth time interval.

13. A communication method, wherein the method is applied to a network device, and the method comprises:
sending measurement priority indication information to a terminal, wherein the measurement priority indication information indicates a measurement priority of global navigation satellite system measurement and a measurement priority of radio resource management measurement, the terminal is configured with a first time interval for global navigation satellite system measurement, the terminal is configured with a second time interval for radio resource management measurement, and the first time interval and the second time interval at least partially overlap.

14. A communication method, wherein the method is applied to a terminal, the terminal is configured with a first time interval for global navigation satellite system measurement, the terminal is configured with a second time interval for radio resource management measurement, and there is a seventh time interval interposed between the first time interval and the second time interval; and
the method comprises:
performing global navigation satellite system measurement by using the first time interval;
when global navigation satellite system measurement is not completed by using the first time interval, continuing to perform global navigation satellite system measurement within the seventh time interval;
when global navigation satellite system measurement is completed within the seventh time interval, performing radio resource management measurement by using the second time interval; and
entering an idle mode when global navigation satellite system measurement is not completed within the seventh time interval.

15. The communication method according to claim 14, wherein the seventh time interval is less than a fourth time threshold, and the method further comprises:
after radio resource management measurement is terminated, sending measurement result information of global navigation satellite system measurement.

16. A communication apparatus, wherein the apparatus is used in a terminal, the terminal is configured with a first time interval for global navigation satellite system measurement, the terminal is configured with a second time interval for radio resource management measurement, the first time interval and the second time interval at least partially overlap, and the apparatus comprises:
a processing module, configured to: perform global navigation satellite system measurement by using the first time interval, and perform radio resource management measurement by using a third time interval, wherein the third time interval is a time interval obtained by delaying the second time interval, and the third time interval is determined based on the second time interval and global navigation satellite system measurement; or
the processing module is alternatively configured to: perform radio resource management measurement by using the second time interval, and perform global navigation satellite system measurement by using a fourth time interval, wherein the fourth time interval is a time interval obtained by delaying the first time interval, and the fourth time interval is determined based on the first time interval and radio resource management measurement.

17. The communication apparatus according to claim 16, wherein the processing module is further configured to determine a measurement priority of global navigation satellite system measurement and a measurement priority of radio resource management measurement;
the processing module is specifically configured to: when the measurement priority of global navigation satellite system measurement is higher than the measurement priority of radio resource management measurement, perform global navigation satellite system measurement by using the first time interval, and perform radio resource management measurement by using the third time interval; and
the processing module is further specifically configured to: when the measurement priority of global navigation satellite system measurement is not higher than the measurement priority of radio resource management measurement, perform radio resource management measurement by using the second time interval, and perform global navigation satellite system measurement by using the fourth time interval.

18. The communication apparatus according to claim 17, wherein the processing module is specifically configured to:
determine a first delay value of an end time of the first time interval relative to a start time of the second time interval, and determine a second delay value of an end time of the second time interval relative to a start time of the first time interval;
when the first delay value is less than the second delay value, determine that the priority of global navigation satellite system measurement is higher than the priority of radio resource management measurement; and
when the first delay value is not less than the second delay value, determine that the priority of global navigation satellite system measurement is not higher than the priority of radio resource management measurement.

19. The communication apparatus according to claim 17, wherein the apparatus further comprises a transceiver module;
the processing module is specifically configured to invoke the transceiver module to receive measurement priority indication information, wherein the measurement priority indication information indicates the measurement priority of global navigation satellite system measurement and the measurement priority of radio resource management measurement; and
the processing module is further specifically configured to determine the measurement priority of global navigation satellite system measurement and the measurement priority of radio resource management measurement based on the measurement priority indication information.

20. The communication apparatus according to any one of claims 16 to 19, wherein a fifth time interval between a start time of the third time interval and a completion time of global navigation satellite system measurement is greater than a first time threshold, and the apparatus further comprises the transceiver module;
the processing module is further configured to invoke the transceiver module to receive radio resource management configuration information by using the fifth time interval; and
the processing module is specifically configured to perform radio resource management measurement based on the radio resource management configuration information by using the third time interval.

21. The communication apparatus according to any one of claims 16 to 20, wherein the fifth time interval between the start time of the third time interval and the completion time of global navigation satellite system measurement is greater than the first time threshold, and the apparatus further comprises the transceiver module; and
the processing module is further configured to invoke the transceiver module to send measurement result information of global navigation satellite system measurement by using the fifth time interval.

22. The communication apparatus according to any one of claims 16 to 21, wherein the terminal obtains a plurality of first measurement results of a plurality of time intervals through radio resource management measurement before the first time interval; and
the processing module is further configured to discard at least one measurement result in the plurality of first measurement results.

23. The communication apparatus according to any one of claims 16 to 21, wherein the second time interval comprises a plurality of sub-intervals; and
the third time interval is a time interval obtained by delaying all of the plurality of sub-intervals; or the third time interval comprises a target sub-interval, and the target sub-interval comprises a sub-interval obtained after a sub-interval overlapping with the first time interval is removed from the plurality of sub-intervals.

24. The communication apparatus according to any one of claims 16 to 23, wherein the processing module is further configured to:
when global navigation satellite system measurement is completed by using the first time interval, start to perform radio resource management measurement at a first moment, wherein the first moment is determined based on a completion moment of global navigation satellite system measurement; and
after radio resource management measurement is terminated by using the second time interval, start to perform global navigation satellite system measurement at a second moment, wherein the second moment is determined based on a completion moment of radio resource management measurement.

25. The communication apparatus according to claim 24, wherein the first moment is the completion moment of global navigation satellite system measurement, or the first moment is a moment obtained by delaying the completion moment of global navigation satellite system measurement by a second time threshold; and
the second moment is the completion moment of radio resource management measurement, or the second moment is a moment obtained by delaying the completion moment of radio resource management measurement by a third time threshold.

26. The communication apparatus according to any one of claims 16 to 25, wherein the processing module is further configured to:
when global navigation satellite system measurement is performed by using the first time interval and the start time of the first time interval is later than the start time of the second time interval, perform radio resource management measurement by using a sixth time interval, wherein the sixth time interval is a time interval between the start time of the first time interval and the start time of the second time interval; and
the processing module is specifically configured to: when radio resource management measurement performed by using the sixth time interval fails, perform radio resource management measurement by using the third time interval.

27. The communication apparatus according to claim 16, wherein the processing module is further configured to:
when radio resource management measurement is performed by using the second time interval and a start time of the first time interval is earlier than a start time of the second time interval, perform global navigation satellite system measurement by using a sixth time interval, wherein the sixth time interval is a time interval between the start time of the first time interval and the start time of the second time interval; and
the processing module is specifically configured to: when global navigation satellite system measurement performed by using the sixth time interval fails, perform global navigation satellite system measurement by using the fourth time interval.

28. A communication apparatus, wherein the apparatus is used in a network device, and the apparatus comprises:
a transceiver module, configured to send measurement priority indication information to a terminal, wherein the measurement priority indication information indicates a measurement priority of global navigation satellite system measurement and a measurement priority of radio resource management measurement, the terminal is configured with a first time interval for global navigation satellite system measurement, the terminal is configured with a second time interval for radio resource management measurement, and the first time interval and the second time interval at least partially overlap.

29. A communication apparatus, wherein the apparatus is used in a terminal, the terminal is configured with a first time interval for global navigation satellite system measurement, the terminal is configured with a second time interval for radio resource management measurement, and there is a seventh time interval interposed between the first time interval and the second time interval; and
the apparatus comprises:
a processing module, configured to perform global navigation satellite system measurement by using the first time interval;
the processing module is further configured to: when global navigation satellite system measurement is not completed by using the first time interval, continue to perform global navigation satellite system measurement within the seventh time interval;
the processing module is further configured to: when global navigation satellite system measurement is completed within the seventh time interval, perform radio resource management measurement by using the second time interval; and
the processing module is further configured to enter an idle mode when global navigation satellite system measurement is not completed within the seventh time interval.

30. The communication apparatus according to claim 29, wherein the seventh time interval is less than a fourth time threshold, the apparatus further comprises a transceiver module, and the transceiver module is configured to:
after radio resource management measurement is terminated, send measurement result information of global navigation satellite system measurement.

31. A communication apparatus, wherein the communication apparatus comprises a processor and a transceiver, and the processor and the transceiver are configured to support the communication apparatus in performing the method according to any one of claims 1 to 15.

32. A computer-readable storage medium, wherein the computer-readable storage medium stores computer instructions, and when the computer instructions are run, the method according to any one of claims 1 to 15 is performed.
